# EUROPÄISCHE PATENTSCHRIFT

(11) **EP 2 952 061 B1**
(45) Veröffentlichungstag und Bekanntmachung des Hinweises auf die Patenterteilung: **14.03.2018**
(21) Anmeldenummer: 14719179.5
(22) Anmeldetag: 31.01.2014
(51) Int. Cl.: H05B 33/08, H05B 37/02

(54) **VORRICHTUNG ZUM LED BETRIEB**
DEVICE FOR LED OPERATION
DISPOSITIF DE FONCTIONNEMENT DE DEL

(30) Priorität: 31.01.2013 AT 302013 U
(43) Veröffentlichungstag der Anmeldung: 09.12.2015
(73) Patentinhaber: Tridonic GmbH & Co. KG, 6851 Dornbirn (AT); Tridonic Jennersdorf GmbH, 8380 Jennersdorf (AT)
(72) Erfinder: DÜNSER, Mathias, 6700 Bludenz (AT); MOOSMANN, Florian, 6850 Dornbirn (AT); KLEBER, Norbert, 6850 Dornbirn (AT); NESENSOHN, Christian, 6840 Götzis (AT); LOCHMANN, Frank, 88147 Esseratsweiler (DE); JUEN, Reinhold, 6850 Dornbirn (AT); MARENT, Günter, 6780 Bartholomäberg (AT); HORN, Frank, 6765 Engi (CH); PACHLER, Peter, 8042 Graz (AT); RIEMER, Steffen, 8564 Krottendorf-Gaisfeld (AT); SCHÖNBERGER, John, 8864 Reichenburg (CH)
(74) Vertreter: Banzer, Hans-Jörg
(86) Internationale Anmeldenummer: PCT/AT2014/000021
(87) Internationale Veröffentlichungsnummer: WO 2014/146150

(56) Entgegenhaltungen:
- EP-A1- 1 372 270
- EP-A1- 2 375 858
- DE-A1- 10 230 154
- US-A1- 2010 213 759

## Beschreibung

Die Erfindung betrifft eine Vorrichtung zum Betreiben von LEDs gemäß dem Oberbegriff des Patentanspruchs 1 und ein Verfahren zum Betreiben von LEDs gemäß dem Oberbegriff des Patentanspruchs 14.

### Technisches Gebiet

Derartige Vorrichtungen werden in Beleuchtungssystemen verwendet, um eine farbige oder flächige Beleuchtung von Räumen, Wegen oder auch Fluchtwegen zu erreichen. Üblicherweise werden dabei die Leuchtmittel von Betriebsgeräten angesteuert und bei Bedarf aktiviert. Für eine derartige Beleuchtung werden organische oder anorganische Leuchtdioden (LED) als Lichtquelle genutzt.

### Stand der Technik

Zur Beleuchtung werden anstelle von Gasentladungslampen und Glühlampen immer häufiger auch Leuchtdioden als Lichtquelle eingesetzt. Die Effizienz und Lichtausbeute von Leuchtdioden wird immer stärker erhöht, so dass sie bei verschiedenen Anwendungen der Allgemeinbeleuchtung bereits zum Einsatz kommen. Allerdings sind Leuchtdioden Punktlichtquellen und strahlen stark gebündeltes Licht aus.

Heutige LED Beleuchtungssystem haben oft jedoch den Nachteil, dass aufgrund von Alterung oder durch Austausch einzelner LEDs oder LED Module sich die Farbabgabe oder die Helligkeit verändern kann. Zudem hat die Sekundäroptik einen Einfluss auf das Thermomanagement, da die Wärmeabstrahlung behindert wird. Zudem kann es aufgrund von Alterung und Wärmeeinwirkung zu einer Veränderung des Phosphors der LED kommen.

Das Dokument DE10230154A1 offenbart eine Vorrichtung bzw.
ein Verfahren nach der Präambel des Anspruchs 1 bzw. 14. Darstellung der Erfindung
Es ist die Aufgabe der Erfindung, ein Leuchtmittel und ein Verfahren bereitzustellen, welches das gleichmäßige und farbechte Ausleuchten einer Fläche durch ein Leuchtmittel mit Leuchtdioden ohne die oben genannten Nachteile bzw. unter einer deutlichen Reduzierung dieser Nachteile ermöglicht.
Diese Aufgabe wird für eine gattungsgemäße Vorrichtung erfindungsgemäß durch die kennzeichnenden Merkmale des Patentanspruchs 1 und für ein Verfahren erfindungsgemäß durch die kennzeichnenden Merkmale der Patentansprüche 14 gelöst. Besonders vorteilhafte Ausführungen der Erfindung sind in den Unteransprüchen beschrieben.

Die erfindungsgemäße Lösung für eine Vorrichtung zum Betreiben von LEDs (organische oder anorganische Leuchtdioden) beruht auf dem Gedanken, dass ein LED-Modul mit wenigstens einer LED von einem Treiber-Modul angesteuert wird,
wobei das LED-Modul über einen ersten Anschluß von dem Treiber-Modul mit einem Strom gespeist wird und ein zweiter Anschluß als Masse-Verbindung vorhanden ist. Das LED-Modul verfügt über einen dritten Anschluß, der als Daten-Kanal ausgebildet ist Der dritte Anschluß ist mit dem Treiber-Modul verbunden, wobei auf dem Daten-Kanal eine Spannung anliegt, die von dem Treiber-Modul gespeist wird.

Auf diese Weise ist es möglich, eine sehr gleichbleibende und gleichmäßige Ausleuchtung einer Fläche durch ein Leuchtmittel mit Leuchtdioden zu erreichen.

### Beschreibung der bevorzugten Ausführungsbeispiele

Nachfolgend soll die Erfindung anhand der beigefügten Zeichnung näher erläutert werden. Es zeigen:
Fig. 1 zeigt eine Ausgestaltung eines erfindungsgemäßen LED-Moduls
Fig. 2 zeigt Ausgestaltungen einer erfindungsgemäßen Übertragung der Informationen

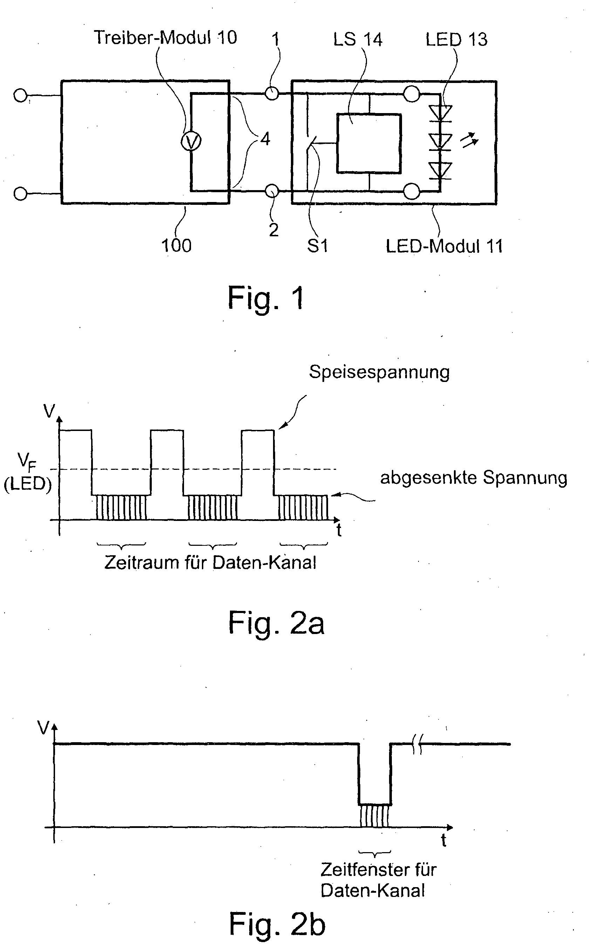

Fig. 1 zeigt eine Ausgestaltung der erfindungsgemäßen Vorrichtung mit einem LED-Modul 11 und einem Treiber-Modul 10.

Nachfolgend wird die Erfindung anhand eines Ausführungsbeispiels einer Vorrichtung 100 zum Betreiben von LEDs 13 erklärt. Diese Vorrichtung weist ein Treiber-Modul 10 auf, und ein von dem Treiber-Modul 10 angesteuertes LED-Modul 11 mit wenigstens einer LED 13 (LED).

Das Treiber-Modul 10 verfügt über einen ersten Anschluß 1, über den das daran angeschlossene LED-Modul11 von dem Treiber-Modul 10 mit einem Strom gespeist werden kann. Dieser Strom dient zur Speisung der LED 13. Weiterhin verfügt das Treiber-Modul 10 über einen zweiten Anschluß 2, der als Masse-Verbindung (GND) vorhanden ist.

Das LED-Modul 11 verfügt über einen ersten Anschluß 1, über den das LED-Modul 11 von dem Treiber-Modul 10 mit einem Strom gespeist wird und über einen zweiten Anschluß 2 als Masse-Verbindung. Es können sich mehrere LED 13 auf einem gemeinsamen LED-Modul 11 befinden.

Das LED-Modul 11 und auch das Treiber-Modul 10 verfügen somit über nur zwei Anschlüsse, wobei gemäß der Erfindung sowohl eine Energie zur Speisung der LED 13 als auch Informationen übertragen werden können. Die Verbindung zum Speisen des LED-Modul 11 ist somit gleichzeitig als Daten-Kanal ausgebildet. Es sind also die Anschlüsse von dem LED-Modul 11 und dem Treiber-Modul 10 miteinander verbunden.

Die Anschlüsse des Treiber-Modul 10 und des LED-Modul 11 sind über die Verdrahtung 4 verbunden. Es ist somit eine Verbindung zum Speisen der LED 13 neben einer Masse-Verbindung vorhanden.

Das Treiber-Modul 10 kann zeitweise die Spannung an dem ersten Anschluß 1 absenken und die Spannung an dem ersten Anschluß 1 überwachen, und dazu ausgelegt sein, eine Änderung der Spannung an diesem Anschluß 1 als Übertragung von Informationen von dem LED-Modul 11 auszuwerten. Typischerweise liegt die abgesenkte Spannung unterhalb der Durchlaßspannung (VF) der LED 13, so dass in der Phase der abgesenkten Spannung die LED 13 nicht aktiv ist, also leuchtet. Die abgesenkte Spannung kann beispielsweise im Bereich von ca. 5 Volt liegen. Es ist somit der Zeitbereich der abgesenkten Spannung der Zeitraum, in dem der Daten-Kanal aktiv ist. Dieser Zeitbereich der abgesenkten Spannung (wo der Daten-Kanal aktiv ist) kann wiederholt mit einer niedrigen Frequenz und kurzen Zeitdauer aktiviert werden, beispielsweise mit einem Einschaltverhältnis von 2 Prozent im Vergleich zu einer Zeitdauer von 98 Prozent für das Anliegen der Speisespannung für die LED 13 (beispielsweise bei einer Frequenz von 100 oder 400 Hertz). Symbolisch ist dieser Ablauf in Fig. 2a dargestellt, wobei zur besseren Darstellung der Zeitraum des Daten-Kanals nicht maßstabsgetreu abgebildet ist. Der Daten-Kanal kann aber beispielsweise nur jeweils nach mehreren Sekunden oder gar Minuten kurzzeitig aktiviert werden (Beispiel Fig. 2b).

Das LED-Modul 11 kann dazu ausgelegt sein, die abgesenkte Spannung an dem ersten Anschluß 1 zum Senden von Informationen kurzzuschließen. Dies kann beispielsweise durch einen Schalter S1 erfolgen, der kurzzeitig den ersten Anschluß (Daten-Kanal) mit dem zweiten Anschluß (Masse-Verbindung (GND)) kurz schließt.

Die von dem LED-Modul 11 gesendeten Informationen können eine Auskunft über einen Parameter des LED-Modul 11 (beispielsweise den Nennstrom oder einen Farbort) oder den Status des LED-Modul 11 (einen Fehler, die Temperatur der LED oder die Betriebsstunden) enthalten.

Die abgesenkte Spannung kann zum Speisen einer Logikschaltung (LS) 14 auf dem LED-Modul 11 verwendet weiden. Die Logikschaltung 14 kann beispielsweise einen Mikrocontroller aufweisen, der die Spannung am Daten-Kanal überwachen kann und auch das Senden eines Signals auf dem Daten-Kanal steuern kann. Beispielsweise kann die Logikschaltung LS 14 einen Schalter S1 ansteuern, der kurzzeitig den ersten Anschluß 1 mit dem zweiten Anschluß (Masse-Verbindung (GND)) kurz schließt.

Die abgesenkte Spannung kann zum Speisen eines Sensors verwendet werden, der auf dem LED-Modul 11 angeordnet ist oder der mit dem LED-Modul 11 verbunden ist. Die von dem LED-Modul 11 gesendeten Informationen kann eine Auskunft über den Status des Sensors oder ein von dem Sensor erfasstes Signal beinhalten.

Über den Daten-Kanal kann eine Adressinformation übertragen werden. Auf diese Weise können bei Anschluß mehrerer LED-Module 11 an ein Treiber-Modul 10 die einzelnen LED-Module 11 identifiziert werden und die LED-Module 11 können einzeln und selektiv Rückmeldungen (spezifische Informationen senden) geben. Die Informationen von dem LED-Modul 11 können nach einer Aufforderung durch das Treiber-Modul 10 gesendet werden.

Das Treiber-Modul 10 kann beispielsweise eine Speiseeinheit, beispielsweise einen Schaltregler, aufweisen, der dazu ausgelegt ist, an dem ersten Anschluß 1 sowohl eine hohe Spannung zur Speisung der LED 13 als auch eine abgesenkte Spannung einzuspeisen. Es können aber auch zwei Speiseeinheiten vorhanden sein, wobei die erste Speiseeinheit zum Bereitstellen der hohen Spannung zur Speisung der LED 13 (Speisespannung) dient und eine zweite Speiseeinheit zum Speisen der abgesenkten Spannung vorhanden sein, wobei zwischen den beiden Speiseeinheiten umgeschaltet werden kann. Die Umschaltung kann beispielsweise dadurch erfolgen, dass beide Speiseeinheiten über Dioden voneinander entkoppelt sind und nur selektiv aktiviert werden. Wenn das LED-Modul 11 zwei Speiseeinheiten aufweist, kann dadurch in einem möglichen Stand-by Betreib ein sehr effizienter Betrieb ermöglicht werden(später erläutert). Es kann das Treiber-Modul 10 weiterhin eine Überwachungsschaltung zum Überwachen der Spannung am ersten Anschluß 1 aufweisen.

Die Speisung der LED 13 mit einer hohen Spannung kann auch derart erfolgen, dass ein bestimmter Strom an dem ersten Anschluß 1 ausgegeben wird. Das Treiber-Modul 10 kann die Amplitude des Stromes regeln. Gleichzeitig muß dieser Strom aber auch bei einer bestimmten Spannung ausgegeben werden, damit die Durchlaßspannung (VF) der LED 13 erreicht wird. Es liegt also bei Betrieb der LED 13 eine relativ hohe Spannung an dem LED-Modul 11 an (die Speisespannung), das Treiber-Modul 10 regelt dabei jedoch üblicherweise auf den ausgegebenen Strom.

Das Treiber-Modul 10 kann auch eine abgesenkte Spannung einspeisen und somit den Daten-Kanal aktiv halten, wenn das LED-Modul 11 nicht über den ersten Anschluß 1 von dem Treiber-Modul 10 mit einem Speise-Strom zum Betreiben der LED 13 gespeist wird. Das LED-Modul 11 kann auch Informationen senden, wenn das LED-Modul 11 nicht über den ersten Anschluß 1 von dem Treiber-Modul 10 mit einem Speise-Strom zum Betreiben der LED 13 gespeist wird. So kann der Daten-Kanal auch in einem Stand-by Modus von dem Treiber-Modul 10 mit einer abgesenkten Spannung gespeist werden und eine Kommunikation zwischen LED-Modul 11 und Treiber-Modul 10 ist auch in diesem Stand-by Modus möglich.

Das LED-Modul 11 kann über einen Speicher verfügen, der von dem Treiber-Modul 10 über den Daten-Kanal ausgelesen werden kann.

Das Treiber-Modul 10 kann dazu ausgelegt sein, die Spannung an seinem Ausgang in dem Zeitraum der abgesenkten Spannung zu überwachen und eine Änderung der Spannung an diesem Ausgang kann als Übertragung von Informationen auswertet werden. Diese Auswertung der Spannung an dem ersten Anschluß 1 kann also zum Empfangen von Informationen, die von dem LED-Modul 11 gesendet wurden, genutzt werden.

Das Treiber-Modul 10 die Spannung kann an seinem ersten Anschluß 1 kurzzeitig absenken und diese abgesenkte Spannung modulieren, vorzugsweise in Form eines pulsmodulierten Signals, um so einen Daten-Kanal zur Verfügung zu stellen und um eine Information an das LED-Modul 11 zu senden.

Das Treiber-Modul 10 kann regelmäßig den Speicher des LED-Modul 11 auslesen und nach dem Austausch des LED-Moduls 11 die ausgelesenen Speicher-Informationen in dem Speicher des neuen LED-Moduls 11 abgelegt werden. Die Signalisierung zum Auslesen des Speichers auf dem LED-Modul 11 kann durch den Benutzer durch eine Schaltfolge an der Versorgungsspannung, einen digitalen Steuerbefehl oder durch eine andere Signalisierung erfolgen. Das Treiber-Modul 10 kann die im Speicher abgelegte Information nach dem Auslesen von einem LED-Modul 11 auch über den Daten-Kanal auch an andere LED-Module 11 weiterleiten.

Das Treiber-Modul 10 kann mehrere LED-Module 11 über denselben ersten Anschluß 1 zur Speisung mit Strom speisen und über denselben ersten Anschluß 1 mit mehreren LED-Modulen 11 Informationen austauschen.

Es können beispielsweise ein oder mehrere LED-Module 11 abgeschaltet werden, indem über den Daten-Kanal eine entsprechende Abschalt-Information an diese LED-Module 11 übertragen wird und diese daraufhin den Strom durch die LED 13 unterbrechen.

Der Sensor kann ein Farbsensor (bspw. CCD Sensor oder eine Photodiode mit Farbfilter) sein. Der Farbsensor kann so platziert sein, dass er einen Teil des von den LED Modulen 11 abgestrahlten Lichtes empfangen kann. Der Farbsensor kann so platziert sein, dass er gegen Umgebungslicht abgeschottet ist und nur von den LED Modulen 11 abgestrahltes Licht empfangen kann. Der Sensor kann aber auch auf dem Reflektor der LED Leuchte platziert werden. Der Sensor kann so platziert sein, dass er direkt oder indirekt das Licht der LED 13 des LED-Modules 11 empfängt.

Der Sensor kann ein Helligkeitssensor (bspw. eine Photodiode) sein. Der Sensor kann ein Umgebungslichtsensor oder ein Kunstlichtsensor sein. Der Sensor, beispielsweise ein Kunstlichtsensor, kann so platziert sein, dass er gegen Umgebungslicht abgeschottet ist und nur von den LED Modulen 11 abgestrahltes Licht empfangen kann. Der Sensor kann so platziert sein, dass er direkt oder indirekt das Licht der LED 13 des LED-Modules 11 empfängt. Der Sensor, vorzugsweise als ein Umgebungslichtsensor, kann so platziert sein, dass er nur Umgebungslicht empfangen kann und gegen von den LED Modulen 11 abgestrahltes Licht abgeschottet ist. Eine derartige Abschottung kann beispielsweise durch einen Farbfilter oder auch durch eine physische Trennung wie beispielsweise eine Art Trennwand zwischen LED 13 und Sensor erreicht werden Der Sensor kann auch auf dem Reflektor der LED Leuchte platziert werden.

Der Sensor kann auch ein Anwesenheitssensor oder Bewegungssensor sein. Zusätzlich oder alternativ kann der Sensor auch ein Temperatursensor sein. Der Sensor kann auch durch eine Kombination von mehreren verschiedenen Sensoren gebildet werden. Beispielsweise können sich in einem Gehäuse mehrere Sensoren befinden, die durch eine gemeinsame Elektronik ausgewertet werden (auch möglich als Multi-Chip-Anordnung).

Auf dem LED-Modul 11 kann auch eine Kunstlast angeordnet sein, die mit dem ersten Anschluß 1 verbunden ist, wobei diese Kunstlast in der Phase der abgesenkten Spannung den ersten Anschluß 1 belasten kann und diese Belastung durch das Treiber-Modul 10 als Information von dem LED-Modul 11 ausgewertet werden kann.

Die Kunstlast kann vorzugsweise durch eine lineare Stromquelle oder ein passives Bauteil, vorzugsweise einen Widerstand, gebildet werden. Die Kunstlast kann auch derart ausgelegt sein, dass eine Absenkung der Spannung am ersten Anschluß 1 bewirkt, dass die Kunstlast ein vorgegebenes zeitliches Verhalten aufweist und die Belastung gemäß einer vorgegebenen Kurve ändert. Dies kann beispielsweise durch Auf- oder Entladen eines Kondensators erfolgen.
Der Verlauf der Änderung der Belastung kann durch das Treiber-Modul 10 ausgewertet werden und die vom LED-Modul 11 übertragene Information somit ausgelesen werden.

Das Treiber-Modul 10 kann dazu ausgelegt sein, sowohl analoge Informationen, vorzugsweise aufgrund der Belastung mit einer Kunstlast, als auch digitale Informationen, vorzugsweise durch pulsweitenmodulierte Signale, von dem LED-Modul 11 zu empfangen.

Das Treiber-Modul 10 kann dazu ausgelegt sein, zu erkennen, ob eine digitale Übertragung (aufgrund einer Änderung der Belastung nach einem Pulsmuster, welches durch die codierte Absenkung der Spannung erkannt werden kann) oder eine analoge Übertragung durch das LED-Modul 11 erfolgt.

Somit kann auch eine Leuchte mit LED 13, aufweisend eine gemäß der Erfindung aufgebaut werden

Es wird auch ein Verfahren zum Betreiben von LEDs 13, ermöglicht wobei LED-Modul 11 mit wenigstens einer LED 13 von einem Treiber-Modul 11 angesteuert wird, und ein Daten-Kanal zur Übertragung von Informationen über das LED-Modul 11 vorhanden ist,
wobei der Daten-Kanal dauerhaft von dem Treiber-Modul 10 mit einer Spannung gespeist wird und das LED-Modul 11 dazu ausgelegt ist, die Spannung an dem Daten-Kanal zum Senden von Informationen zu ändern, beispielsweise kurzzuschließen oder durch Belastung zu verringern.

Die Informationen von dem LED-Modul 11 können nach einer Aufforderung durch das Treiber-Modul 10 gesendet werden.

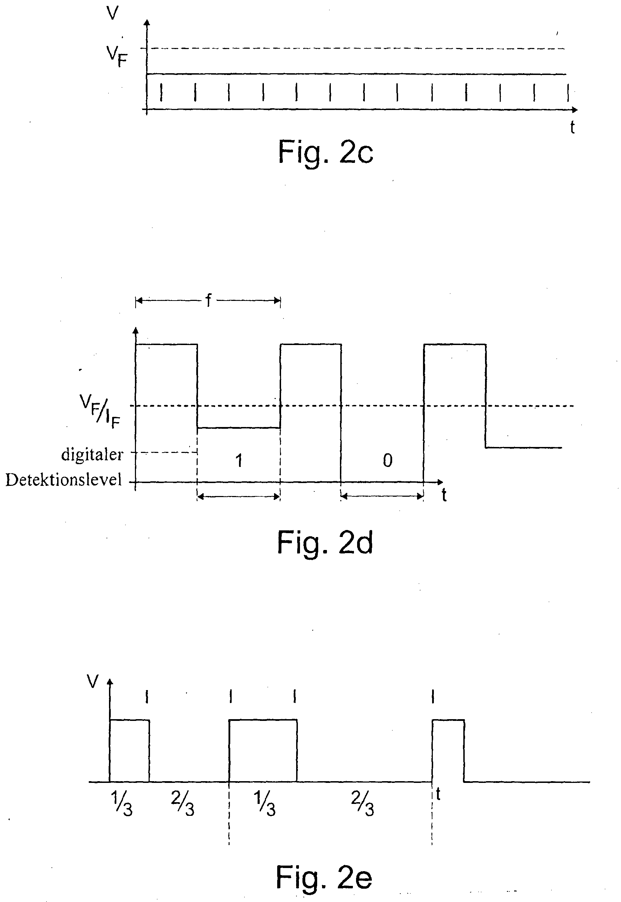

Der Daten-Kanal kann auch in einem Stand-by Modus oder in einer Initialisierungsphase zur Verfügung stehen, indem das Treiber-Modul 10 den ersten Anschluß 1 dauerhaft oder wiederholt mit einer abgesenkten Spannung speist, auch wenn keine Spannung zum Betrieb der LED 13 ausgegeben wird (s. Fig. 2c). Auf diese Weise kann auch eine Kommunikation zwischen LED-Modul 11 und Treiber-Modul 10 auch in diesem Stand-by Modus möglich sein, beispielsweise kann somit auch der Sensor im Stand-by Modus ausgelesen werden. Wenn das LED-Modul 11 zwei Speiseeinheiten aufweist, muß nur die zweite Speiseeinheit in dem möglichen Stand-by Betrieb aktiv sein, so kann ein sehr effizienter Betrieb ermöglicht werden. Es wäre aber auch denkbar, dass bei Vorhandensein nur einer Speiseeinheit diese in einem angepassten Betriebsmodus, beispielsweise in einem Burst-Modus, die abgesenkte Spannung bereit stellt und dieser angepasste Betriebsmodus kann auch effizient sein.

Das LED-Modul 11 kann über einem Speicher zur Hinterlegung von Informationen über das LED-Modul 11 verfügen, wobei die Informationen im Speicher optional auch abgeändert werden können. Die Informationen im Speicher können aufgrund einer Kalibrierungsmessung abgeändert werden. Die Informationen im Speicher können um einen Korrekturfaktor abgeändert werden. Der Korrekturfaktor kann von der Alterung bzw. der Betriebsdauer des LED-Moduls 11 abhängig sein. Der Korrekturfaktor kann von der Temperatur des LED-Moduls 11 abhängig sein.

Die Übertragung von Informationen von dem Treiber-Modul 10 zu dem LED-Modul 11 kann sich auch von der Übertragung vom LED-Modul 11 zum Treiber-Modul 10 unterscheiden. Beispielsweise kann das LED-Modul 11 die Information während der Phase der abgesenkten Spannung senden, während das Treiber-Modul 10 seine Information durch eine Pulsmodulation der Speisespannung zum Betrieb der LED 13 (also durch Modulation der Spannung mit hohem Pegel, Fig. 2e) oder durch ein Absenken der Spannung entweder auf Null oder den abgesenkten Wert (z.B. 5 Volt) ein moduliertes Signal in der Phase, in der die LED 13 nicht mit einer Speisespannung gespeist werden, überträgt (Fig. 2d). Bei der letzteren Variante kann eine Grenzspannung (Digital detection level) festgelegt sein, wobei ein Überschreiten dieser Grenzspannung aber Unterschreiten der Durchlaßspannung VF als Hoch-Pegel (Logisch 1) und ein Unterschreiten der Grenzspannung als Nieder-Pegel (Logisch 0) des Signals ausgewertet wird. Das LED-Modul 11 kann dazu ausgelegt sein, zu erkennen, wann das Treiber-Modul 10 eine Information überträgt, und kann sein Senden von Informationen auf Zeiträume beschränken, in denen der Daten-Kanal durch Anliegen der abgesenkten Spannung verfügbar ist aber das Treiber-Modul 10 keine Information sendet (dies kann für verschiedene Sendearten durch das Treiber-Modul 10 gelten).

Das Treiber-Modul 10 kann einen Schaltregler, beispielsweise einen AC-DC-Wandler, enthalten. Das Treiber-Modul 10 kann einen PFC (aktive Leistungsfaktorkorrekturschaltung) enthalten. Das Treiber-Modul 10 kann eine Potentialtrennung aufweisen. Das Treiber-Modul 10 verfügt vorzugsweise über eine Schnittstelle zur Benutzersteuerung. Diese Schnittstelle kann beispielsweise zum Anschluß an ein Lichtsteuersystem wie beispielsweise DALI oder DMX ausgelegt sein.

## Patentansprüche

1. Vorrichtung zum Betreiben von LEDs (13), aufweisend:
- ein Treiber-Modul (10), und,
- ein von dem Treiber-Modul (10) angesteuertes LED-Modul (11) mit wenigstens einer LED (13),
- wobei das Treiber-Modul (10) über einen ersten Anschluß (1), der zur Speisung des LED-Moduls (11) mit einem Strom ausgelegt ist, und über einen zweiten Anschluß (2) als Masse-Verbindung (GND) verfügt,
- wobei das LED-Modul (11) über einen ersten Anschluß (1), der ausgelegt ist, von dem Treiber-Modul (1) mit einem Strom gespeist zu werden, und über einen zweiten Anschluß (2) als Masse-Verbindung verfügt,
- wobei der erste bzw. zweite Anschluß (1, 2) des LED-Moduls (11) mit dem ersten bzw. zweiten Anschluß (1, 2) des Treiber-Moduls (10) verbunden ist,
**dadurch gekennzeichnet,**
- **dass** das Treiber-Modul (10) dazu ausgelegt ist, zeitweise die Spannung an seinem ersten Anschluß (1) abzusenken und die Spannung an seinem ersten Anschluß (1) zu überwachen, und eine Änderung der Spannung an seinem ersten Anschluß (1) als Übertragung von Informationen von dem LED-Modul (11) auszuwerten, wobei das LED-Modul (11) dazu ausgelegt ist, als Information eine Adressinformation zu übertragen,
- **dass** das Treiber-Modul (10) dazu ausgelegt ist, sowohl analoge Informationen, als auch digitale Informationen von dem LED-Modul (11) zu empfangen.

2. Vorrichtung zum Betreiben von LEDs (13), nach Anspruch 1,
**dadurch gekennzeichnet,**
- **dass** das LED-Modul (11) dazu ausgelegt ist, in der Phase der abgesenkten Spannung seinen ersten Anschluß (1) und seinen zweiten Anschluß (2) zum Senden von Informationen kurzzuschließen;
- **dass** die von dem LED-Modul (11) gesendeten Informationen eine Auskunft über einen Parameter des LED-Moduls (11) oder den Status des LED-Moduls (11) enthalten; und/oder
- **dass** das LED-Modul (11) dazu ausgelegt ist, auch Informationen zu senden, wenn das LED-Modul (11) nicht über seinen ersten Anschluß (1) von dem Treiber-Modul (10) mit einem Strom gespeist wird sondern nur mit der abgesenkten Spannung versorgt wird.

3. Vorrichtung zum Betreiben von LEDs (13), nach einem der Ansprüche 1 bis 2,
**dadurch gekennzeichnet,**
**dass** die abgesenkte Spannung zum Speisen einer Logikschaltung (LS 14) des LED-Moduls (11) verwendet wird.

4. Vorrichtung zum Betreiben von LEDs (13), nach Anspruch 3,
**dadurch gekennzeichnet,**
**dass** die abgesenkte Spannung zum Speisen eines Sensors verwendet wird, der auf dem LED-Modul (11) angeordnet ist oder der mit dem LED-Modul (11) verbunden ist.

5. Vorrichtung zum Betreiben von LEDs (13), nach Anspruch 4,
**dadurch gekennzeichnet,**
**dass** die von dem LED-Modul (11) gesendeten Informationen eine Auskunft über den Status des Sensors oder ein von dem Sensor erfasstes Signal beinhalten.

6. Vorrichtung zum Betreiben von LEDs (13), nach einem der Ansprüche 1 bis 5,
**dadurch gekennzeichnet,**
**dass** das Treiber-Modul (10) dazu ausgelegt ist,
- zumindest zeitweise auch eine abgesenkte Spannung auf seinen ersten Anschluß (1) einzuspeisen, wenn das LED-Modul (11) nicht über seinen ersten Anschluß (1) von dem Treiber-Modul (10) mit einem Strom gespeist wird;
- die abgesenkte Spannung an seinem ersten Anschluß (1) zu modulieren; und/oder
- die Spannung an seinem ersten Anschluß (1) kurzzeitig abzusenken, vorzugsweise in Form eines pulsmodulierten Signals, um eine Information an das LED-Modul (11) zu senden.

7. Vorrichtung zum Betreiben von LEDs (13), nach einem der Ansprüche 2 bis 6,
**dadurch gekennzeichnet,**
- **dass** das LED-Modul (11) über einen Speicher verfügt, der von dem Treiber-Modul (10) ausgelesen werden kann, und
- **dass** das Treiber-Modul (10) dazu ausgelegt ist, regelmäßig den Speicher des LED-Moduls (11) auszulesen und nach einem Austausch des LED-Moduls (11) die ausgelesenen Speicher-Informationen in dem Speicher des neuen LED-Moduls (11) abzulegen.

8. Vorrichtung zum Betreiben von LEDs (13), nach einem der Ansprüche 1 bis 7,
**dadurch gekennzeichnet,**
- **dass** das Treiber-Modul (10) dazu ausgelegt ist, mehrere LED-Module (11) über seinen ersten Anschluß (1) mit Strom zu speisen und über seinen ersten Anschluß (1) auch mit mehreren LED-Modulen (11) Informationen auszutauschen,
- **dass** das Treiber-Modul (10) dazu ausgelegt ist, die mehreren LED-Module (11) abzuschalten, indem mittels der abgesenkten Spannung eine entsprechende Abschalt-Information an diese LED-Module (11) übertragen wird, und
- **dass** das LED-Modul (11) dazu ausgelegt ist, daraufhin den Strom durch die LED (13) zu unterbrechen.

9. Vorrichtung zum Betreiben von LEDs (13), nach dem Anspruch 4 und optional zusätzlich nach einem oder mehreren der Ansprüche 5-8,
**dadurch gekennzeichnet,**
**dass** der Sensor ein Farbsensor (bspw. CCD Sensor) ist; und/oder dass der Sensor ein Anwesenheitssensor oder Bewegungssensor ist.

10. Vorrichtung zum Betreiben von LEDs (13), nach einem der Ansprüche 1 bis 9,
**dadurch gekennzeichnet,**
- **dass** auf dem LED-Modul (11) eine Kunstlast angeordnet ist, die mit dem ersten Anschluß (1) des LED-Moduls (11) verbunden ist, wobei diese Kunstlast bei Anliegen der abgesenkten Spannung den ersten Anschluß (1) des LED-Moduls (11) belastet, und
- **dass** das Treiber-Modul (10) dazu ausgelegt ist, diese Belastung als Information von dem LED-Modul (11) auszuwerten.

11. Vorrichtung zum Betreiben von LEDs (13), nach Anspruch 10,
**dadurch gekennzeichnet,**
**dass** die Kunstlast durch eine lineare Stromquelle oder ein passives Bauteil, vorzugsweise einen Widerstand, gebildet wird.

12. Vorrichtung zum Betreiben von LEDs (13), nach einem der Ansprüche 1 bis 11,
**dadurch gekennzeichnet,**
**dass** das Treiber-Modul (10) dazu ausgelegt ist, die empfangbaren analogen Informationen aufgrund der Belastung mit einer Kunstlast des LED-Moduls zu empfangen, und die empfangbaren digitalen Informationen durch pulsweitenmodulierte Signale zu empfangen.

13. Leuchte mit LED (13), aufweisend eine Vorrichtung nach einem der vorangegangen Ansprüche.

14. Verfahren zum Betreiben von LEDs (13),
- wobei ein LED-Modul (11) mit wenigstens einer LED (13) von einem Treiber-Modul (10) angesteuert wird,
- wobei das Treiber-Modul (10) über einen ersten Anschluß (1), der zur Speisung des LED-Moduls (11) mit einem Strom ausgelegt ist, und über einen zweiten Anschluß (2) als Masse-Verbindung (GND) verfügt,
- wobei das LED-Modul (11) über einen ersten Anschluß (1), der ausgelegt ist, von dem Treiber-Modul (1) mit einem Strom gespeist zu werden, und über einen zweiten Anschluß (2) als Masse-Verbindung verfügt,
- wobei der erste bzw. zweite Anschluß (1, 2) des LED-Moduls (11) mit dem ersten bzw. zweiten Anschluß (1, 2) des Treiber-Moduls (10) verbunden ist,
- wobei der erste Anschluß (1) des Treiber-Moduls (10) auch zur Übertragung von Informationen von dem LED-Modul (11) ausgelegt ist,
**dadurch gekennzeichnet,**
- **dass** als Information eine Adressinformation übertragen wird;
- **dass** das Treiber-Modul (10) zeitweise die Spannung an seinem ersten Anschluß (1) absenkt;
- **dass** das LED-Modul (11) bei abgesenkter Spannung zum Senden von Informationen die Spannung an seinem ersten Anschluß (1) ändert, beispielsweise kurzschließt oder durch Belastung verringert; und
- **dass** das Treiber-Modul (10) sowohl analoge Informationen, als auch digitale Informationen von dem LED-Modul (11) empfängt.

15. Verfahren zum Betreiben von LEDs (13), nach Anspruch 14,
**dadurch gekennzeichnet,**
- **dass** die Informationen von dem LED-Modul (11) nach einer vorgegebenen Zeitspanne nach Absenken der Spannung durch das Treiber-Modul (10) gesendet werden; und/oder
- **dass** die abgesenkte Spannung auch in einem Stand-by Modus von dem Treiber-Modul (10) an seinem Anschluß (1) gespeist wird und eine Kommunikation zwischen LED-Modul (11) und Treiber-Modul (10) auch in diesem Stand-by Modus möglich ist.

## Claims

1. A device for operating LEDs (13), comprising:
- a driver module (10), and,
- a LED module (11) controlled by the driver module (10) with at least one LED (13),
- wherein the driver module (10) has a first connection (1), which is designed to feed the LED module (11) with a current, and has a second connection (2) as a ground connection (GND),
- wherein the LED module (11) has a first connection (1), which is designed to be fed by the driver module (1) with a current, and has a second connection (2) as a ground connection ,
- wherein the first or second connection (1, 2) of the LED module (11) is connected with the first or second connection (1, 2) of the driver module (10),
**characterized in**
- **that** the driver module (10) is designed to temporarily lower the voltage at its first connection (1) and to monitor the voltage at its first connection (1), and to evaluate a change of the voltage at its first connection (1) as a transfer of information from the LED module (11), wherein the LED module (11) is designed to transfer address information as information,
- **that** the driver module (10) is designed, to receive both analogue information, as well as digital information from the LED module (11).

2. A device for operating LEDs (13), according to Claim 1,
**characterized in**
- **that** the LED module (11) is designed in the phase of the lowered voltage to short-circuit its first connection (1) and its second connection (2) for sending information;
- **that** the information sent from the LED module (11) contains information on a parameter of the LED module (11) or the status of the LED module (11); and/or
- **that** the LED module (11) is also designed to send information, if the LED module (11) is not fed with a current by the driver module (10) via its first connection, but rather is only supplied with lowered voltage.

3. A device for operating LEDs (13) according to any one of Claims 1 to 2,
**characterized in**
**that** the lowered voltage is used for feeding a logic circuit (LS 14) of the LED module (11).

4. A device for operating LEDs (13), according to Claim 3,
**characterized in**
**that** the lowered voltage is used for feeding a sensor, which is arranged on the LED module (11) or which is connected with the LED module (11).

5. A device for operating LEDs (13), according to Claim 4,
**characterized in**
**that** the information sent from the LED module (11) contains information about the status of the sensor or a signal detected by the sensor.

6. A device for operating LEDs (13), according to any one of Claims 1 to 5, **characterized in**
**that** the driver module (10) is designed
- to at least temporarily also feed a lowered voltage to its first connection (1), if the LED module (11) is not fed with a current by the driver module (10) via its first connection (1);
- to modulate the lowered voltage applied to its first connection (1); and/or
- to temporarily lower the voltage to its first connection (1), preferably in the form of a pulse-modulated signal, in order to send information to the LED module (11).

7. A device for operating LEDs (13), according to any one of Claims 2 to 6,
**characterized in**
- **that** the LED module (11) has a memory, which can be read by the driver module (10), and
- **that** the driver module (10) is designed to regularly read the memory of the LED module (11) and after a replacement of the LED module (11) to store the read memory information in a memory of the new LED module (11).

8. A device for operating LEDs (13), according to Claims 1 to 7,
**characterized in**
- **that** the driver module (10) is designed to feed several LED modules (11) with current via its first connection (1) and also to exchange information with several LED modules (11) via its first connection (1),
- **that** the driver module (10) is designed to turn off the several LED modules (11), while by means of the lowered voltage corresponding turn-off information is transferred to these LED modules (11), and
- **that** the LED module (11) is designed thereupon to interrupt the current through the LED (13).

9. A device for operating LEDs (13), according to Claim 4 and optionally additionally according to one or several of Claims 5-8,
**characterized in**
- **that** the sensor is a color sensor (for example, a CCD sensor); and/or that the sensor is a presence sensor or motion sensor.

10. A device for operating LEDs (13), according to any one of Claims 1 to 9,
**characterized in**
- **that** a dummy load is arranged on the LED module (11), which is connected with the first connection (1) of the LED module (11), wherein when the lowered voltage is applied this dummy load loads the first connection (1) of the LED module (11), and
- **that** the driver module (10) is designed to evaluate this load as information from the LED module (11).

11. A device for operating LEDs (13), according to Claim 10,
**characterized in**
**that** the dummy load is formed by a liner current source or a passive component, preferably a resistor.

12. A device for operating LEDs (13), according to any one of Claims 1 to 11,
**characterized in**
**that** the driver module (10) is designed to receive the receivable analogue information based on the load with a dummy load of the LED module, and to receive the receivable digital information by pulse width-modulated signals.

13. A luminaire with LED (13) having a device according to any one of the preceding claims.

14. A method for operating LEDs (13),
- wherein a LED module (11) is controlled by a driver module (10) with at least one LED (13),
- wherein the driver module (10) has a first connection (1), which is designed to feed the LED module (11) with a current, and has a second connection (2) as a ground connection (GND),
- wherein the LED module (11) has a first connection (1), which is designed to be fed with a current by the driver module (1), and has a second connection (2) as a ground connection,
- wherein the first or second connection (1, 2) of the LED module (11) is connected with the first or second connection (1, 2) of the driver module (10),
- wherein the first connection (1) of the driver module (10) is also designed to transfer information from the LED module (11),
**characterized in**
- **that** address information is transferred as information;
- **that** the driver module (10) temporarily lowers the voltage to its first connection (1);
- **that** the LED module (11) changes, for example, short-circuits or reduces the voltage to its first connection (1) through the load when the voltage for sending information is lowered; and
- **that** the driver module (10) receives both analogue information, as well as digital information from the LED module (11).

15. A method for operating LEDs (13), according to Claim 14,
**characterized in**
- **that** the information is sent from the LED module (11) after a predetermined time span after lowering the voltage through the driver module (10); and/or
- **that** the lowered voltage is also fed in a stand-by mode from the driver module (10) to its connection (1) and a communication is also possible between LED module (11) and driver module (10) in said stand-by mode.

## Revendications

1. Dispositif destiné à faire fonctionner des DEL (13), présentant :
- un module pilote (10), et
- un module de DEL (11) piloté par le module pilote (10) avec au moins une DEL (13),
- le module pilote (10) disposant d'une première connexion (1) qui est conçue pour l'alimentation du module de DEL (11) avec un courant et d'une deuxième connexion (2) en tant que raccordement de masse (GND),
- le module de DEL (11) disposant d'une première connexion (1) qui est conçue pour être alimentée avec un courant par le module pilote (10) et d'une deuxième connexion (2) en tant que raccordement de masse,
- la première ou respectivement la deuxième connexion (1, 2) du module de DEL (11) étant raccordée à la première ou respectivement à la deuxième connexion (1, 2) du module pilote (10),
**caractérisé en ce que**
- le module pilote (10) est conçu pour abaisser par moments la tension sur sa première connexion (1) et pour surveiller la tension sur sa première connexion (1), et pour analyser une variation de la tension sur sa première connexion (1) en tant que transmission d'informations par le module de DEL (11), le module de DEL (11) étant conçu pour transmette une information d'adresse en tant qu'information,
- le module pilote (10) est conçu pour recevoir aussi bien des informations analogiques que des informations numériques en provenance du module de DEL (11).

2. Dispositif destiné à faire fonctionner des DEL (13) selon la revendication 1,
**caractérisé en ce que**
- le module de DEL (11) est conçu pour, dans la phase de la tension abaissée, court-circuiter sa première connexion (1) et sa deuxième connexion (2) pour l'envoi d'informations ;
- les informations envoyées par le module de DEL (11) contiennent un renseignement sur un paramètre du module de DEL (11) ou sur le statut du module de DEL (11) ; et/ou
- le module de DEL (11) est conçu pour envoyer également des informations quand le module de DEL (11) n'est pas alimenté par le module pilote (10) avec un courant par le biais de sa première connexion (1) mais est approvisionné uniquement avec la tension abaissée.

3. Dispositif destiné à faire fonctionner des DEL (13) selon l'une des revendications 1 à 2,
**caractérisé en ce que**
la tension abaissée est utilisée pour l'alimentation d'un circuit logique (LS 14) du module de DEL (11).

4. Dispositif destiné à faire fonctionner des DEL (13) selon la revendication 3,
**caractérisé en ce que**
la tension abaissée est utilisée pour l'alimentation d'un capteur qui est disposé sur le module de DEL (11) ou est raccordé au module de DEL (11).

5. Dispositif destiné à faire fonctionner des DEL (13) selon la revendication 4,
**caractérisé en ce que**
les informations envoyées par le module de DEL (11) contiennent un renseignement sur le statut du capteur ou un signal détecté par le capteur.

6. Dispositif destiné à faire fonctionner des DEL (13) selon l'une des revendications 1 à 5,
**caractérisé en ce que**
le module pilote (10) est conçu
- pour injecter au moins par moments également une tension abaissée sur sa première connexion (1) quand le module de DEL (11) n'est pas alimenté avec un courant par le module pilote (10) par le biais de sa première connexion (1) ;
- pour moduler la tension abaissée sur la première connexion (1) ; et/ou
- pour abaisser brièvement la tension sur sa première connexion (1), de préférence sous la forme d'un signal modulé par impulsions pour envoyer une information au module de DEL (11).

7. Dispositif destiné à faire fonctionner des DEL (13) selon l'une des revendications 2 à 6,
**caractérisé en ce que**
- le module de DEL (11) dispose d'une mémoire qui peut être lue par le module pilote (10), et
- le module pilote (10) est conçu pour lire régulièrement la mémoire du module de DEL (11) et, après un remplacement du module de DEL (11), déposer les informations de mémoire lues dans la mémoire du nouveau module de DEL (11).

8. Dispositif destiné à faire fonctionner des DEL (13) selon l'une des revendications 1 à 7,
**caractérisé en ce que**
- le module pilote (10) est conçu pour alimenter en courant plusieurs modules de DEL (11) par le biais de sa première connexion (1) et d'échanger des informations également avec d'autres modules de DEL (11) par le biais de sa première connexion (1),
- le module pilote (10) est conçu pour mettre hors circuit les plusieurs modules de DEL (11) par le fait qu'une information de mise hors circuit correspondante est transmise à ces modules de DEL (11) au moyen de la tension abaissée, et
- le module de DEL (11) est conçu pour interrompre ensuite le courant traversant la DEL (13).

9. Dispositif destiné à faire fonctionner des DEL (13) selon la revendication 4 et optionnellement, en plus, selon l'une ou plusieurs des revendications 5 à 8,
**caractérisé en ce que**
le capteur est un capteur de couleurs (par ex. capteur CCD) ; et/ou **en ce que** le capteur est un détecteur de présence ou un détecteur de mouvement.

10. Dispositif destiné à faire fonctionner des DEL (13) selon l'une des revendications 1 à 9,
**caractérisé en ce que**
- sur le module de DEL (11), il est disposé une charge factice qui est raccordée à la première connexion (1) du module de DEL (11), cette charge factice chargeant la première connexion (1) du module de DEL (11) en présence de la tension abaissée, et
- le module pilote (10) est conçu pour analyser cette contrainte en tant qu'information en provenance du module de DEL (11).

11. Dispositif destiné à faire fonctionner des DEL (13) selon la revendication 10,
**caractérisé en ce que**
la charge factice est formée par une source lumineuse linéaire ou un composant passif, de préférence une résistance.

12. Dispositif destiné à faire fonctionner des DEL (13) selon l'une des revendications 1 à 11,
**caractérisé en ce que**
le module pilote (10) est conçu pour recevoir les informations analogiques recevables sur la base de la contrainte exercée par une charge factice du module de DEL et pour recevoir les informations numériques recevables par des signaux modulés par durée d'impulsion.

13. Lampe avec DEL (13), présentant un dispositif selon l'une des revendications précédentes.

14. Procédé destiné à faire fonctionner des DEL (13),
- un module de DEL (11) avec au moins une DEL (13) étant piloté par un module pilote (10),
- le module pilote (10) disposant d'une première connexion (1) qui est conçue pour l'alimentation du module de DEL (11) avec un courant, et d'une deuxième connexion (2) en tant que raccordement de masse (GND),
- le module de DEL (11) disposant d'une première connexion (1) qui est conçue pour être alimentée avec un courant par le module pilote (10), et d'une deuxième connexion (2) en tant que raccordement de masse,
- la première ou respectivement la deuxième connexion (1, 2) du module de DEL (11) étant raccordée à la première ou respectivement à la deuxième connexion (1, 2) du module pilote (10),
- la première connexion (1) du module pilote (10) étant conçue également pour la transmission d'informations par le module de DEL (11),
**caractérisé en ce**
- **qu'**une information d'adresse est transmise en tant qu'information ;
- le module pilote (10) abaisse par moments la tension sur sa première connexion (1) ;
- le module de DEL (11), pour l'envoi d'informations, quand la tension est abaissée, modifie la tension sur sa première connexion (1), par exemple la court-circuite ou la diminue par contrainte ; et
- le module pilote (10) reçoit du module de DEL (11) aussi bien des informations analogiques que des informations numériques.

15. Procédé destiné à faire fonctionner des DEL (13) selon la revendication 14,
**caractérisé en ce que**
- après une période de temps définie après l'abaissement de la tension par le module pilote (10), les informations sont envoyées par le module de DEL (11); et/ou
- la tension abaissée est alimentée également dans un mode de veille par le module pilote (10) sur sa connexion (1), et une communication entre le module de DEL (11) et le module pilote (10) est également possible dans ce mode de veille.
